# EUROPEAN PATENT APPLICATION

(11) **EP 1 169 922 A1**
(43) Date of publication of application: **09.01.2002**
(21) Application number: 00202327.3
(22) Date of filing: 03.07.2000
(51) Int. Cl.: A23J 3/08, A23J 3/10

(54) **Method of enzymatically cross-linking proteins and phenolic polymers**

(71) Applicant: INSTITUUT VOOR AGROTECHNOLOGISCH ONDERZOEK (ATO-DLO), 6700 AA Wageningen (NL)
(72) Inventor: Oudgenoeg, Gideon, 1015 XD Amsterdam (NL); Boeriu, Carmen Gabriela, 6703 EV Wageningen (NL); Hilhorst, Maria Helena, 6706 CP Wageningen (NL); Gruppen, Harm, 6708 NA Wageningen (NL); Laane, Nicolaas Charles Marie, 1412 GS Naarden (NL); Voragen, Alphons Gerard Joseph, 6705 BB Wareningen (NL)
(74) Representative: Jorritsma, Ruurd

(57) **Abstract**

The present invention relates to a method of cross-linking a protein or peptide and a phenolic polymer or oligomer having substituents derived from carboxylic acids containing hydroxyl substituted phenyl groups by means of an enzyme and an oxidizing agent suitable for the enzyme in a solvent, which method comprises reacting a mixture of protein or peptide, oxidizing agent, enzyme and polymer or oligomer in the solvent, wherein the method is controlled such that in the mixture the ratio of target amino groups in the protein or peptide to hydroxyl substituted phenyl groups in the polymer or oligomer is more than equimolar. With the present method predominantly hetero-cross-linking of protein and polymer occurs.

## Description

The present invention relates to a method of enzymatically cross-linking a protein or peptide and a phenolic polymer or oligomer which is controlled such that predominantly hetero-cross-linked products are formed. The invention further relates to the products obtained with this method and the uses thereof.

Chemical and enzymatic modification of proteins and phenolic acid containing polymers, such as polysaccharides is known from the prior art. Several patents describe the cross-linking of proteins and peptides, using for instance peroxidase (JP 11075887) or multi-copper oxidase, such as laccase (EP 0947142). Peroxidases use hydrogen peroxide as electron acceptor, also referred to as oxidizing agent. Laccase uses oxygen as electron acceptor. US 5,998,176 uses oxidases and/or peroxidase for gelling of pectic materials. In WO 96/03440 an oxidase is used as an enzyme to gell polymeric materials, in particular pectin.

WO 99/16983 describes an enzymatic oxidation process comprising bringing together an oxidative enzyme, a hydrogen acceptor and a hydrogen donor in a reaction mixture and causing an oxidative reaction to proceed in the reaction mixture under the influence of the enzyme with at least the hydrogen acceptor and the hydrogen donor as substrate. As an example of this process cross-linking of water soluble proteins and/or mixtures thereof with polysaccharides is mentioned.

According to this document a separate cross-linking agent, which is a phenol, is added to the reaction mixture. The drawback of this process is that some residual amount of the phenol will be present in the final product. This is not desirable in case the final product is used as a food additive, which is often the case with these kind of products. A further drawback of this process is that the products obtained have a yellow or brown color, whereas a white to off-white color would be desirable.

WO 96/03440 uses laccase as an enzyme to increase the viscosity of aqueous gellable polymeric materials, preferably pectins, in aqueous solution. It is suggested that the phenolic polymeric material can be polymerized with other polymeric substances such as proteins. As possible proteins those with tyrosine residues in the amino acid sequence are mentioned. However, it is not actually shown in this document that it is possible to copolymerize a phenolic polymeric material with a protein.

In several scientific articles it has been mentioned that addition of proteins or tyrosines to incubations of arabinoxylans, peroxidase and hydrogen peroxide did not retard the viscosity increase (van Huystee and Zeng, Phytochemistry 34 (1993) p. 933-939) and that tyrosine was not present in the cross-linked material (Schooneveld-Bergmans et al, Carbohydrate Polymers 38 (1999) 309-317). Preliminary studies to enzymatically cross-link proteins and arabinoxylans were carried out by Figueroa-Espinoza and Rouau. In Figueroa-Espinoza and Rouau, J. Agric. Food Chem 46 (1998) 2583-2589 they studied the effect of equimolar and ten-fold excess of tyrosine and lysine on the gelation of arabinoxylans catalysed by either laccase or peroxidase/H₂O₂ and found no effect. Using cysteine instead of tyrosine, gelling was delayed, due to reduction of the ferulic acid radical to ferulic acid (Hoseney and Faubion Cereal Chemistry 58 (1981) 421-424, Figueroa-Espinoza and Rouau, J. Agric. Food Chem. 46 (1998) 2583-2589). Since no coupling of these amino acids to ferulic acid was observed, Figueroa-Espinoza and Rouau concluded that ferulic acid does not react with amino-, tyrosyl or thiol groups. Addition of proteins to arabinoxylans retarded laccase and peroxidase/H₂O₂ catalysed gelling only when the disulfide bridges in the proteins had been reduced to thiol groups (Figueroa-Espinoza and Rouau, Food Hydrocolloids 13 (1999) 65-71). Although results obtained in J. Sci. Food Agric. 79 (1999) 460-463 indicate that tyrosine might be linked to ferulic acid, using a fungal manganese peroxidase, no cross-linking of proteins and arabinoxylans has been reported. Therefore, prior to the present invention, attempts to cross-link proteins and phenolic polymers all failed.

Suprisingly, the present inventors have now found a method which makes it possible to cross-link phenolic polymers or oligomers such as polysaccharides and proteins or peptides resulting in products having desirable properties. The present invention provides a method of cross-linking a protein or peptide and a phenolic polymer or oligomer having substituents derived from carboxylic acids containing hydroxyl substituted phenyl groups by means of an enzyme and an oxidizing agent suitable for the enzyme in a solvent, which method comprises: reacting a mixture of protein or peptide, oxidizing agent, enzyme and phenolic polymer or oligomer in the solvent, wherein the method is controlled such that in the mixture the ratio of target amino groups in the protein or peptide to hydroxyl substituted phenyl groups in the phenolic polymer or oligomer is more than equimolar.

The target amino acids in the protein or peptide are those amino acids that are capable to undergo cross-linking reactions under the influence of the particular enzyme/oxidizing agent couple used. The number of target amino groups can be determined by kinetic studies or modeling the protein structure with computer programs suitable for that purpose. These are techniques that are known by the skilled person.

A phenolic polymer or oligomer as used herein is a polymer or oligomer having substituents derived from carboxylic acids containing hydroxyl substituted phenyl groups. For determination of hydroxyl substituted phenyl groups, see Gruppen, H., Marseille, J.P. Voragen, A.G.J., Hamer, R.J., and Pilnik, W. 1989 J. Cereal Science 9, 247-260.

Without wishing to be bound by any theory, it is believed that the proteins or peptides and phenolic polymers or oligomers react with the enzymes with rates reflected by their 1/Km values or, as for peroxidase, by the apparent V/Km values. The lower the Km, or the higher the V/Km, the better a substrate for the enzyme. In order to achieve heterolinkage, the better substrate must be present in a lower concentration. In a preferred embodiment, the parameters (concentration/Km) or (concentration ∗ (V/Km)) must be equal for both substrates. However, when non-enzymatic redox reactions occur between the substrates, the ratio must be corrected for this effect. By limiting the presence of the preferred substrate in the reaction mixture, in this case the phenolic polymer or oligomer, the inventors were able to obtain favorable results. By subsequent stepwise or continuous addition of small quantities of the preferred substrate, the reaction yield could be improved, while keeping the concentration of this substrate low. The method thus described can be characterized as 'addition in a kinetically controlled manner'. The kinetic parameters Km or apparent V/Km can be determined by methods known in the art for each combination of enzyme/oxidizing agent and substrate.

The advantage of the invention is that it provides an enzymatic method to obtain the desired cross-link and that the process control of the cross-linking is improved. In this manner the desired cross-linking can be obtained without need for the exogenous addition of phenols. The final product contains hetero-cross-linked materials. It has an off-white to pale yellow color, contrary to the yellow or brown material that results when exogenous phenols are added. The amounts of protein-protein or phenolic polymer-phenolic polymer dimers are minimized. The starting materials are derived from renewable resources, and the resulting material is biodegradable.

The protein or peptide must be present initially in a high ratio as compared to the phenolic polymer or oligomer, but enzyme and/or oxidizing agent may be added later to start the reaction. These can also be supplemented during the reaction. Slow, continuous addition of oxidizing agent is preferred, too high a concentration of this component inactivates the enzyme.

It is preferred to carry out the method of the invention as follows:
a) providing a mixture of protein or peptide, oxidizing agent and enzyme in the solvent and
b) adding the polymer or oligomer in a kinetically controlled manner to the mixture obtained in step a).

More preferably, the phenolic polymer or oligomer is added to the mixture obtained in step a) at the onset of homogeneous cross-linking of the protein or peptide. Even more preferably, the phenolic polymer or oligomer is added stepwise or continuously to the mixture obtained in step a), optionally while the cross-linking is monitored. As described above, at the same time enzyme and/or oxidizing agent can be added stepwise or continuously.

The onset of cross-linking of the protein can be monitored by conventional methods. In general, this can be done by measuring the changes in absorbance or fluorescence. Also changes in viscosity can be observed. The cross-linking can also be monitored discontinously by taking samples at appropriate times and analyzing them.

The reaction can be illustrated as follows. First, a mixture is prepared of the protein, the enzyme and oxidizing agent in a suitable buffer. The absorbance at a suitable wavelength increases due to homolinkage formation. Next the first aliquot of the phenolic polymer is added to the protein mixture. The absorbance does not change for a while, till all phenolic polymer is consumed. When the aborbance increases as before addition of the phenolic polymer, the next aliquot of phenolic polymer is added. When no changes occur after addition of the polymer, further aliquots of oxidizing agent are added. When still no changes occur, an aliquot of enzyme is added.

According to another embodiment of the invention the molar ratio of target amino groups of protein or peptide to hydroxyl substituted phenyl groups in the phenolic polymer or oligomer in the reaction mixture is maintained at a value of more than 10, preferably more than 30, in particularly more than 50. These ratio's assure the favorable kinetic conditions as described above.

The concentration of the various compounds (enzyme, oxidizing agent, protein or peptide and phenolic polymer or oligomer) in the reaction mixture can vary over broad ranges. In general the upper limit of the amount of protein or peptide is determined by the solubility of the protein or peptide in the solvent. In general, initially this amount will be between 0.1 and 40 % by weight based on the solvent. The amount of phenolic polymer or oligomer in the reaction mixture is determined according to the invention, depending on kinetic constants. The final added amount will depend on the amount of protein or peptide initially added. The ratio of protein or peptide to phenolic polymer or oligomer can be up to 100 or more.

The amount of enzyme and oxidizing agent depend very much on the particular substances used and the desired reaction time. More enzyme will increase the reaction rate. The amount of oxidizing agent is limited by the fact that it could affect the activity of the enzyme. The amount of enzyme in the medium is from pM to mM (10⁻¹² to 10⁻³ M) concentrations. The amount of oxidizing agent in the medium is nM to M (10⁻⁹ to 10⁰ M). In the course of the reaction additional amounts of reagents or enzymes may be added.

The solvent can be an organic or aqueous solvent or a mixture of aqueous solution and organic solvent or an organic solvent with a small amount of water. Preferably, the solvent is water.

### Phenolic polymers or oligomers

As described above for the invention polymeric or oligomeric materials having substituents derived from carboxylic acids containing hydroxyl substituted phenyl groups are used as a starting material in the process. Preferred carboxylic acids containing hydroxyl substituted phenyl groups are ferulic acid, caffeic acid, coumaric acid, vanillic acid, cinnamic acid. Preferably, polymers or oligomers with ferulic acid (4-hydroxy-3-methoxy-cinnamic acid) or coumaric acid based substituents are used.

The polymer or oligomer is preferably a polysaccharide or oligosaccharide having substituents derived from carboxylic acids containing hydroxyl substituted phenyl groups. Examples of the polysaccharides are pectins, heteroxylans as wel as hemicellulosic material. According to the invention preferably arabinoxylans or arabinoxylan fragments are used. Arabinoxylans contain ferulic acid groups.

Arabinoxylans can be schematically represented by the following formula: 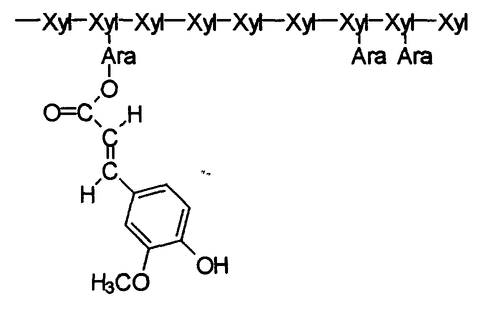 wherein Xyl stands for a xylose residue and Ara stands for an arabino residue.

Besides the above mentioned naturally occurring polysaccharides which are preferred, also polysaccharides to which carboxylic acids containing hydroxyl substituted phenyl groups have been added either enzymatically or chemically, are within the scope of the present application.

### Enzymes

According to the invention as an enzyme a peroxidase or equivalent catalytic substances such as hemoglobin or microperoxidase, or polyphenol oxidases such as laccase or tyrosinase can be used. The preferred enzymes are peroxidases. The peroxidase can be obtained from plant, bacterial, fungal and animal sources. When peroxidases are used, the oxidizing agent is hydrogen peroxide, methylperoxide, ethylperoxide or sodiumperborate. Alternatively, hydrogen peroxide can be generated *in situ* by an enzyme system containing an oxidase such as glucose oxidase, sulfhydryl oxidase, vanillyl alcohol oxidase etc. and an appropriate substrate. Plant peroxidases are the preferred peroxidases, of which horseradish peroxidase is the preferred peroxidase. When polyphenol oxidases are used, the oxidizing agent is oxygen.
Enzyme activities are determined as specified by the suppliers.

### Proteins and peptides

The proteins or peptides that can be cross-linked according to the invention are preferably those containing tyrosine, lysine and cysteine moieties as the target amino acid. Tyrosine is the preferred amino acid. The peptides or proteins can have a molecular weight of 100 to 10,000,000 Da. Preferably, the proteins or peptides are soluble under the reaction conditions.

The proteins and polypeptides can be synthetic or natural. The peptides and proteins can be from bacterial, fungal, animal or plant origin. Examples of suitable proteins are: ovalbumin, lactalbumin, bovine serum albumin, casein, collagen, gelatin, soy protein, proteins from vegetables, potatoes or cereals. Preferably, α-lactalbumin or casein is used.

### Products:

The present invention also relates to the products obtained with the method of the invention. In general such products find an application as food additives, for instance as emulsion stabilizers and as foam forming and foam stabilizing agents. Other applications are the use as hydrogel to absorb liquid. Depending on the properties of the starting materials (e.g. molecular weight and number of phenolic groups present in the phenolic polymer and the type and size of the protein and the number of tyrosine residues present in the protein), and the control of reaction conditions (e.g. ratio protein to phenolic polymer and partial or exhaustive cross-linking) products with different properties can be obtained. For example variation of starting materials and control of reaction conditions allows the control of the gelling properties of the products. A person skilled in the art will be able to select those conditions suited for the specific application he or she envisages. A specific characteristic of the products according to the invention is the pale, off-white to white color of the cross-linked products, when non-colored proteins are used.

### Examples

### Example 1

To a sample containing 10 milligram α-lactalbumin/ml in 0.1 M sodium phosphate buffer pH 7.0 (total volume 2 ml) were added 10 microliter of HRP (horse radish peroxidase; Horse radish, Sigma type VI-A) solution (1.4 mg/ml and 10 microliter of H₂O₂ (2.5 millimolar). 25 aliquots of 10 microliter of a 30 millimolar solution of arabinoxylan (DP, degree of polymerisation, 10, isolated from wheat) containing ferulic acid, were sequentially added to the reaction mixture. The progress of the reaction was followed by measuring the increase of fluorescence emission at 410 nanometer (excitation wavelength 318 nanometer). During the course of reaction further aliquots of H₂O₂ (8 times 10 microliter 25 micromolar to 2 ml of incubation) and HRP (4 times 10 microliter 40 micromolar to 2 ml of incubation) were added. In this example the incubation contained 330 nanomolar reactive tyrosine (target amino group) i.e. one reactive tyrosine per lactalbumin. Per aliquot arabinoxylan 3.6 nanomolar ferulic acid was added. The ratio reactive tyrosine to ferulic acid was thus kept at 100:1.

The following controls were carried out:
- α-Lactalbumin and other ingredients as mentioned above, but without arabinoxylan. Buffer was used to make the volume up to 2 ml.
- α-Lactalbumin and other ingredients as mentioned above, but without arabinoxylan and peroxidase. Buffer was used to make the volume up to 2 ml.
- Arabinoxylan without α-lactalbumin. Buffer was used to make the volume up to 2 ml.

Formation of the homo- and heteroproducts was detected by SDS PAGE gel electrophoresis on 8-25 % gradient gels. A heteroproduct (conjugate of protein and arabinoxylan) was detected in the gels of the reaction mixture containing α-lactalbumin, arabinoxylan (DP 10, containing ferulic acid), HRP and H₂O₂, as compared to controls containing only α-lactalbumin, HRP and H₂O₂.
The increase in viscosity of the complete reaction mixture containing α-lactalbumin, arabinoxylan, HRP and H₂O₂ and of the controls was measured by capillary viscosimetry.

The following values for the viscosity were obtained:

| | | |
|---|---|---|
| controls | α-lactalbumin + HRP + H₂O₂ | 0.948 mm²/s |
| | arabinoxylan (DP 10) + HRP + H₂O₂ | 0.927 mm²/s |
| reaction | α-lactalbumin + HRP + H₂O₂ + arabinoxylan (DP 10) | 0.968 mm²/s |

These results show a significant increase in the viscosity. It should be noted that this increase is observed for arabinoxylan (DP 10) having a low molecular weight. The increase in viscosity will be even more prominent when higher molecular weight arabinoxylan fractions are used.

### Example 2

To a sample containing 2.5 g sodium caseinate in 10 ml of 0.1 M sodium phosphate buffer pH 7.0 were added 100 microliter of HRP (horse radish peroxidase; Horse radish, type VI-A of Sigma) solution (1.6 mg/ml) and 100 microliter of H₂O₂ (100 millimolar). 3 ml of a 0.2 % (weight) solution of arabinoxylan (high molecular weight, isolated from wheat) containing 0.1 -0.3 % (wt) ferulic acid, were continuously (drop-wise) added to the reaction mixture, under mixing, during 1 hour. In this example, the ratio between reactive tyrosine residues in the protein to ferulic acid residues in the arabinoxylan was 100:1 or higher.

The following controls were carried out:
- Sodium caseinate and other ingredients as mentioned above, but without arabinoxylan. Buffer was used to make the volume up to 13.2 ml.
- Sodium caseinate and other ingredients as mentioned above, when the 3 ml of arabinoxylan were added at the beginning of the reaction (batch experiment).
- Arabinoxylan and other ingredients as mentioned above, without sodium caseinate. Buffer was used to make the volume up to 13.2 ml.

Formation of the homo- and heteroproducts was detected by SDS PAGE gel electrophoresis on 8-25 % gradient gels. A heteroproduct (conjugate of protein and arabinoxylan) with molecular weight higher than 300000 Da was detected in the gels of the reaction mixture containing sodium caseinate, arabinoxylan, HRP and H₂O₂, with drop-wise addition of the arabinoxylan as compared to controls containing only sodium caseinate, HRP and H₂O₂ and controls containing sodium caseinate, arabinoxylan, HRP and H₂O₂, but when the arabinoxylan was added at the beginning of the reaction. The increase in viscosity of the complete reaction mixture containing sodium caseinate, arabinoxylan, HRP and H₂O₂ and of the controls was measured by capillary viscosimetry.

The following values for the viscosity were obtained:

| | | |
|---|---|---|
| controls | Na caseinate + HRP + H₂O₂ | 1.765 mm2/s |
| | arabinoxylan + HRP + H₂O₂ | 1.031 mm2/s |
| | Na caseinate + arabinoxylan + HRP + H₂O₂ (batch experiment) | 1.872 mm2/s |
| reaction | Na caseinate + HRP + H₂O₂ + arabinoxylan (drop wise) | 2.263 mm2/s |

These results show a significant increase in the viscosity of the reaction mixture containing sodium caseinate, arabinoxylan, HRP and H₂O₂, with drop-wise addition of the arabinoxylan as compared to controls containing only sodium caseinate, HRP and H₂O₂ (22.5 %) and controls containing sodium caseinate, arabinoxylan, HRP and H₂O₂, but when the arabinoxylan was added at the beginning of the reaction (15 %).

## Claims

1. Method of cross-linking a protein or peptide and a phenolic polymer or oligomer having substituents derived from carboxylic acids containing hydroxyl substituted phenyl groups by means of an enzyme and an oxidizing agent suitable for the enzyme in a solvent, which method comprises reacting a mixture of protein or peptide, oxidizing agent, enzyme and phenolic polymer or oligomer in the solvent, wherein the method is controlled such that in the mixture the ratio of target amino groups in the protein or peptide to hydroxyl substituted phenyl groups in the phenolic polymer or oligomer is more than equimolar.

2. Method according to claim 1, wherein the molar ratio of target amino groups in the protein or peptide to hydroxyl substituted phenyl groups in the phenolic polymer or oligomer in the reaction mixture is more than 10, preferably more than 30.

3. Method according to claim 1, which comprises
a) providing a mixture of protein or peptide, oxidizing agent and enzyme in the solvent and
b) adding the phenolic polymer or oligomer in a kinetically controlled manner to the mixture obtained in step a).

4. Method according to claim 3, wherein the phenolic polymer or oligomer is added to the mixture obtained in step a) at the onset of homogeneous cross-linking of the protein or peptide.

5. Method according to claim 3 or 4, wherein the polymer or oligomer is added stepwise or continuously to the mixture obtained in step a).

6. Method according to any of claims 1 to 5, wherein the phenolic polymer or oligomer is a phenolic polysaccharide or oligosaccharide.

7. Method according to any of claims 1 to 6, wherein the substituents derived from carboxylic acids containing hydroxyl substituted phenyl groups are ferulic acid or coumaric acid.

8. Method according to claim 7, wherein the phenolic polymer or oligomer is a polysaccharide or oligosaccharide containing one or more ferulic acid and/or coumaric acid groups.

9. Method according to claim 8, wherein the polymer or oligomer is an arabinoxylan.

10. Method according to any of claims 1 to 9, wherein the protein or peptide contains a tyrosine, lysine or cystein moiety as the target amino group.

11. Method according to claim 10, wherein the protein is α-lactalbumin or casein.

12. Method according to any of claims 1 to 11, wherein the enzyme is a peroxidase and the oxidizing agent hydrogen peroxide, methylperoxide, ethylperoxide or sodiumperborate.

13. Method according to claim 12, wherein the enzyme is horseradish peroxidase.

14. Method according to any of claims 1 to 11, wherein the enzyme is a polyphenol oxidase.

15. Product obtainable by the method of any of claims 1 to 14.

16. Product according to claim 15, which has a white to off-white color.
